# EUROPEAN PATENT APPLICATION

(11) **EP 0 886 450 A2**
(43) Date of publication of application: **23.12.1998**
(21) Application number: 98111157.8
(22) Date of filing: 17.06.1998
(51) Int. Cl.: H04Q 7/18

(54) **Battery saving in a frequency divided paging network**

(30) Priority: 17.06.1997 JP 160265/97
(71) Applicant: NEC CORPORATION, Tokyo (JP)
(72) Inventor: Morishima, Masaaki, Kakegawa-shi, Shizuoka (JP)
(74) Representative: VOSSIUS & PARTNER

(57) **Abstract**

In order to reduce battery consumption of a pager in a frequency divided pager network system, synchronization of the pager is established pager after the pager is initially energized. Thereafter, a check is made to determine if the pager is located in an external paging area. If the pager is determined to be within the external paging area, a check is further made to determine if the pager is located in an associated paging area. If the pager is detected to be located in the associated paging area, then the pager is locked to one of a plurality of paging channels.

## Description

The present invention relates to a method of effectively saving battery power in a multi-frequency radio pager network wherein an overall service coverage area is divided into a plurality of paging areas. More specifically, the present invention relates to such a method which features an effective battery power saving while awaiting massages.

A radio paging system is usually designed such that a pager is able to receive its paging message, via a predetermined paging channel, throughout an entire service coverage area to which the subscriber has subscribed.

However, the European Telecommunications Standards Institute has proposed to provide frequency divided network operations, which are disclosed in a paper entitled "European Radio Message system (ERMES), pr ETS 300 133-4, November 17, 1995". The frequency divided network operation implies that adjacent paging areas use different frequencies. Within one network a pager should use adjacent frequencies in adjacent paging areas.

For the convenience of description it is assumed that the number of frequency channels assigned to an overall service coverage is 16 and depicted by CH0-CH15.

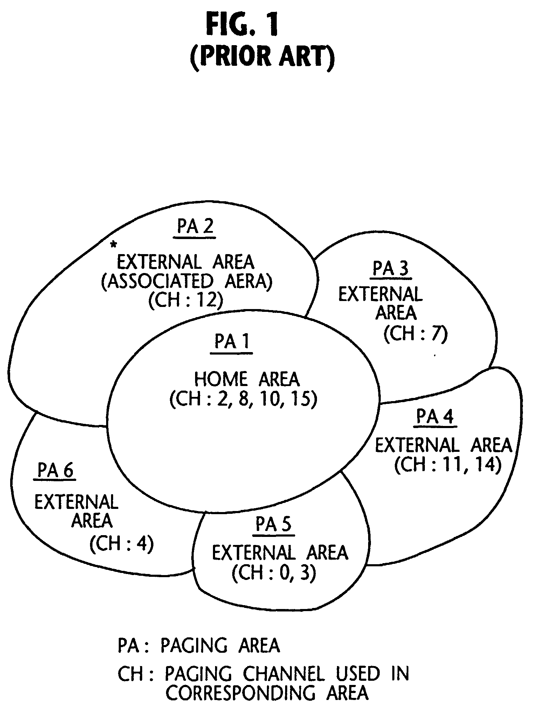

Fig. 1 schematically illustrates a service coverage area that is divided into six paging areas PA1-PA6 by way of example. Further assuming that the paging areas PA1-PA6 have been assigned frequency channels CH0, CH2-CH4, CH7-CH8, CH10-CH12, and CH14-CH15 as indicated. As shown in Fig. 1, the paging area PA1 is depicted by a home area, while each of the remaining paging areas PA2-PA6 is denoted by an external area. The home area is a paging area which is managed by a home operator to which a specific user has subscribed. On the other hand, the external area is located outside the home area. It is to be noted that there are two types of external areas. One is referred to as an associated area which is managed by an associated operator with which the home operator has an agreement to exclusively transfer calls, and the other is an external area wherein the user is unable to receive any paging services. Therefore, for the sake of simplifying the disclosure, an external area, which is managed by an associated operator, is referred to as an associated area in the instant disclosure. In Fig. 1, it is assumed that the paging area PA2 is an associated area.

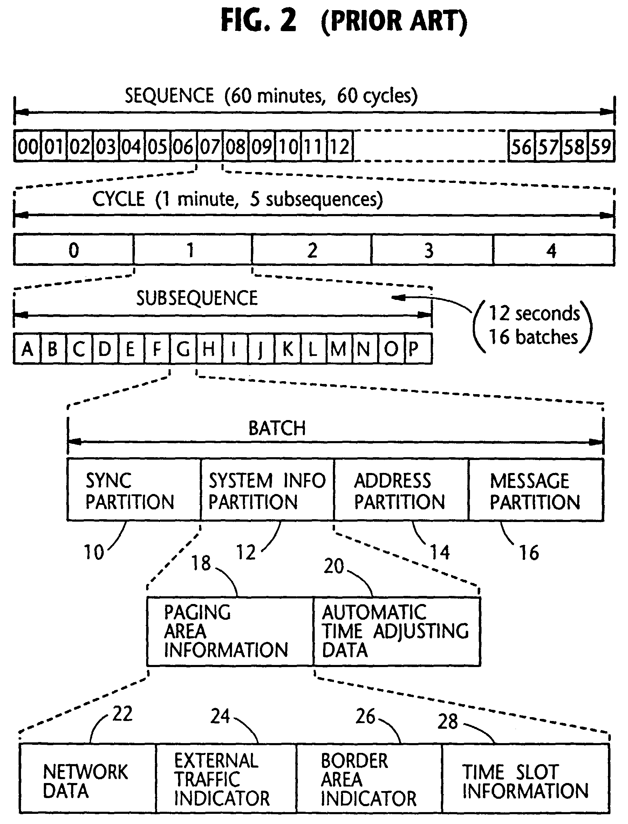

Fig. 2 is a chart which depicts a format of the paging signal which is transmitted to the pagers in the ERMES. As shown in Fig. 2, there is provided a sequence of 60 minutes total duration and comprising 60 cycles. Each cycle is divided into five subsequences commencing at 12-second intervals, and each subsequence is further divided into 16 batches labeled A-P. The pager population is divided into 16 groups and each pager allocated to one of the 16 batches (A-P) and accordingly, each pager is addressed in its own batch type transmission.

As shown in Fig. 2, each batch is further subdivided into four partitions. That is, the batch starts with a synchronization partition 10 which is followed by a system information partition 12. An address partition 14 comes next, which is followed by a message partition 16. Further, the system information partition 12 is comprised of a paging area information 18 and an automatic time adjusting data 20. Still further, the paging area information 18 includes a network data 22, an external traffic indicator 24, a border area indicator 26, and a time slot information 28.

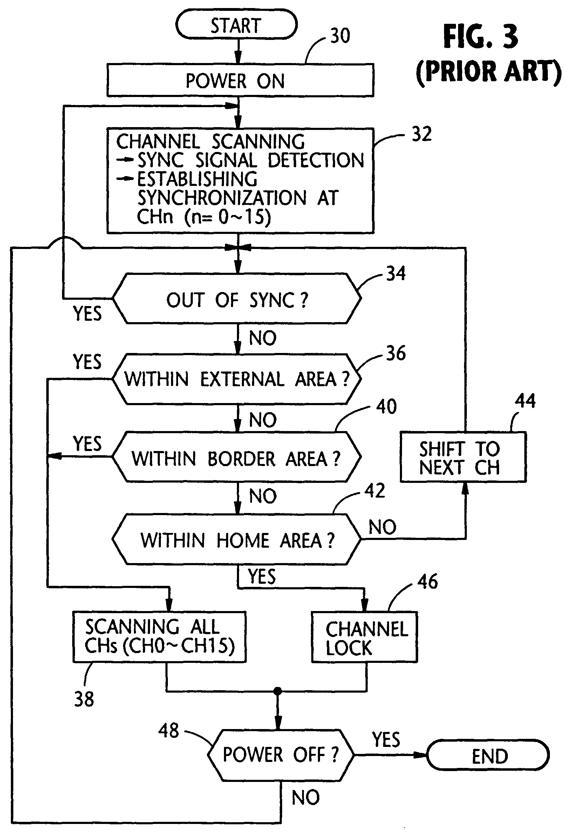

When a pager is powered on, it is necessary to establish synchronization using a sync signal transmitted from a base station. Thereafter, the pager begins to detect in which paging area the pager is located, after which the pager becomes ready for message reception. These operations are described with reference to Fig. 3.

As shown in Fig. 3, when a pager is energized at step 30, the pager initiates channel scanning in order to detect a sync signal (step 32). It is assumed that the pager in question has been allocated to the batch G merely by way of example. That is, in such a case, the pager tries to detect the sync signal transmitted in the batch G. At step 32, it is assumed that the pager established synchronization at a channel n (n=0-15). Thereafter, at step 34, a check is made to determine if the pager is out of synchronization. At this time, the pager's synchronization has just been established, it is correct to say that the routine goes to step 36, at which the pager checks to see if it is within an external area. This check is done by referring to the network data 22 of Fig. 2, which is sent in the batch G in this particular case. If the answer to the inquiry made at step 36 is affirmative, the routine goes to step 38 at which, according to the ERMES, the pager begins to scan all the channels (viz., CH0-CH15) allocated to the paging system. In this case, the pager is ready to receive a message(s) if transmitted thereto.

Therefore, when the routine goes to step 38, it is necessary to initiate another routine (not shown) for receiving messages directed to the pager. However, the present invention is not concerned with the massage reception and thus, the descriptions thereof will be omitted for brevity.

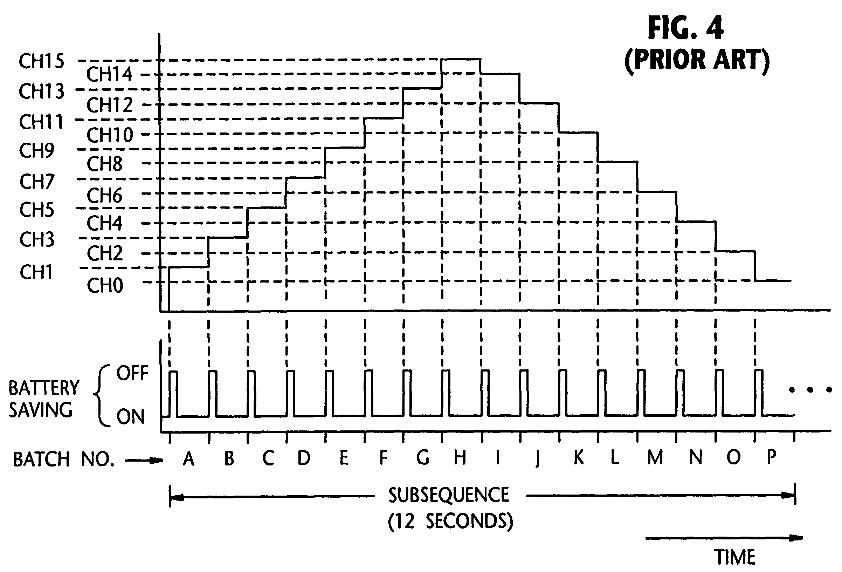

Fig. 4 is a diagram schematically showing a manner wherein the pager scans all the channels CH0-CH15 during one subsequence (12 seconds). It should be noted that if the pager is found to be located in an external paging area, the pager is not locked to a channel.

Turning to Fig. 3, if the answer to the inquiry made at step 36 is negative, the routine goes to step 40 at which a check is made to determine if the pager is located in a border area by referring to the border area indicator 26 (Fig. 2). If the answer is YES at step 40, the routine goes to step 38. Otherwise ("NO" at step 40), a check is made to determine if the pager is located within the home area (step 42). If the answer is NO at step 42, the pager increments the channel number (step 44) and repeats the above mentioned steps. On the other hand, if the answer at step 42 is positive (viz., YES), the routine goes to step 46 at which the pager locks the channel.

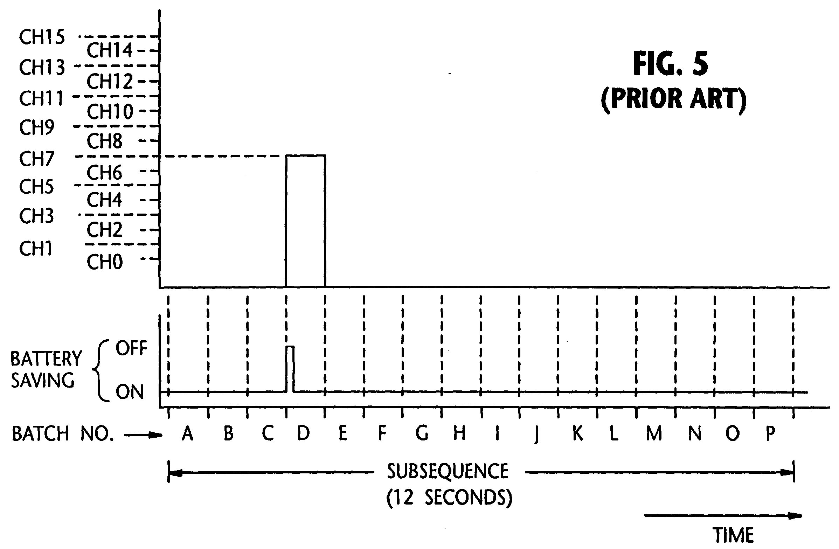

Fig. 5 is a diagram schematically showing a manner wherein the pager is locked to CH7 (for example) via which it is expected for the pager to receive messages.

Turning to Fig. 3, when the pager is found to be still energized at step 48, the routine returns back to step 34. Otherwise, the routine is terminated.

As mentioned above, according to the ERMES, when the pager is located in an external paging area, the pager scans all the channels allocated to the system even if the pager has been synchronized. Scanning all the channels is objectionable in view of the standpoint of battery power saving.

It is therefore an object of the present to provide a method of reducing pager's battery consumption by locking a channel when the pager is located within an associated paging area.

In brief, the object is achieved by a technique wherein in order to reduce battery consumption of a pager in a frequency divided pager network system, synchronization of the pager is established pager after the pager is initially energized. Thereafter, a check is made to determine if the pager is located in an external paging area. If the pager is determined to be within the external paging area, a check is further made to determine if the pager is located in an associated paging area. If the pager is detected to be located in the associated paging area, then the pager is locked to one of a plurality of paging channels.

The features and advantages of the present invention will become more clearly appreciated from the following description taken in conjunction with the accompanying drawings in which like elements are denoted by like reference numerals and in which:
Fig. 1 is a diagram schematically showing a plurality of paging areas in a frequency divided paging network, having been referred to in the opening paragraphs of the instant disclosure;
Fig. 2 is a chart depicting a known format of the signal applied to a pager used in the paging network of Fig. 1;
Fig. 3 is a flow chart which shows steps for describing the related art;
Fig. 4 is a diagram schematically showing a manner wherein the pager scans all the channels allocated to the system;
Fig. 5 is a diagram schematically showing a manner wherein the pager is locked to a paging channel;
Fig. 6 is a block diagram showing a hardware of a pager to which the present invention is applicable; and
Fig. 7 is a flow chart which shows steps which characterize the operation of the present invention.

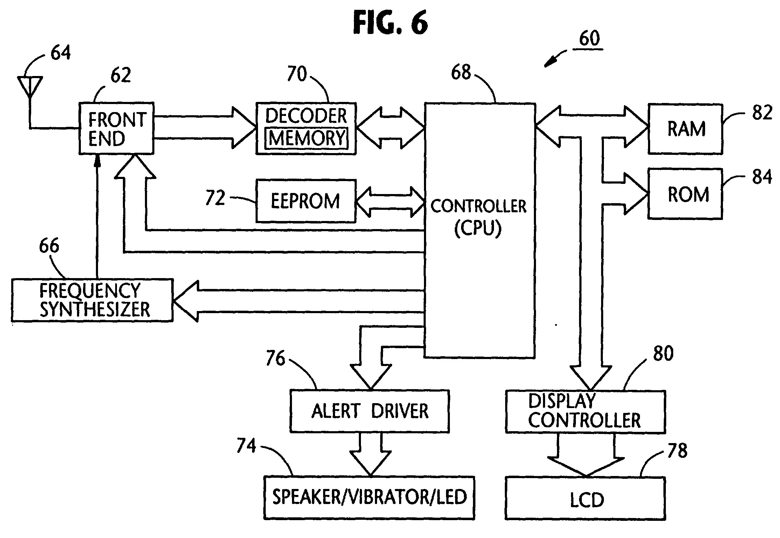

Referring now to Fig. 6, there is shown in block diagram form a hardware arrangement of a pager 60 to which the present invention is applicable. Basic pager's operations are well known in the art and accordingly, a brief description thereof will be given.

It is assumed that the pager 60 has not yet been tuned to any channel. It is therefore necessary to bring the pager into a condition for receiving a message(s). This operation is required in the event that the pager 60 is initially energized due to the replacement of a battery (not shown) or if the pager 60 is transported into an adjacent paging area, etc. More specifically, when the pager 60 is moved to a new paging area, the pager is rendered out of synchronization.

As shown in Fig. 6, a front end (viz., radio section) 62 is provided for amplifying and demodulating a code-modulated carrier wave (viz., channel frequency) received by an antenna 64. The front end 62 comprises a high frequency amplifier, a frequency converter, an IF (intermediate frequency) amplifier, and a discriminator (neither shown in Fig. 6). When the pager 60 scans the channels, the front end 62 is successively tuned to the above mentioned channels CH0-CH15 in a predetermined order under control of a frequency synthesizer 66 as well as a controller (CPU: central processing unit) 68. A decoder 70 receives the output of the front end 62 (viz., the demodulated signal) and decodes the same. When the pager 60 is powered on, a pager's ID (identification), stored in a programmable ROM (random access memory) such as an EEPROM 72, is written into a memory 74. If the pager's own ID coincides with an ID sent from a base station, the controller responds to the ID coincidence and energizes an alert component 74 such as a speaker, a vibrator, and/or an LED (light emitting diode) via a alert driver 76. Further, a message (if any) is displayed on an LCD (liquid crystal display) under control of a display controller 80. A RAM (random access memory) 82 provides a working space, while a ROM 84 previously stores a program for controlling the overall operation of the pager 60.

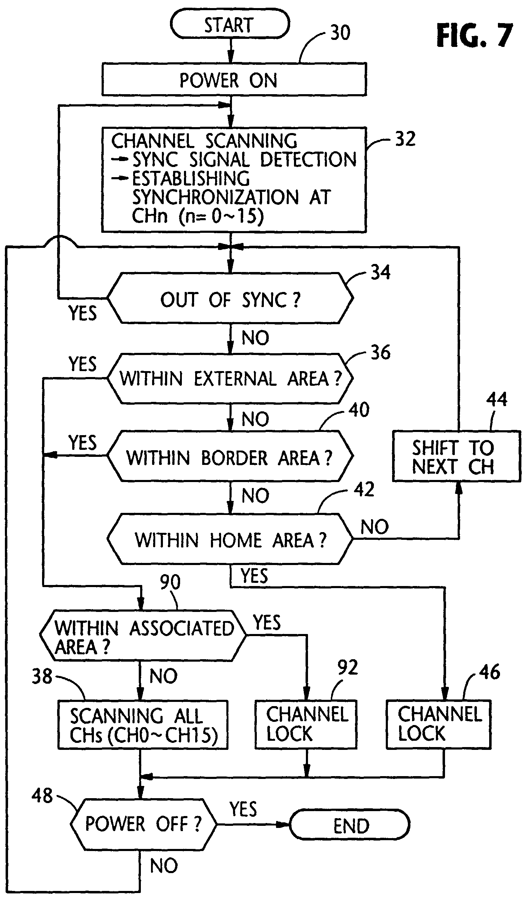

Fig. 7 is a flow chart which shows steps which characterize the operation of the embodiment according to the present invention. Comparing the flow charts of Figs. 3 and 7, the flow chart of Fig. 7 includes additional steps 90 and 92. Other than this, Fig. 7 is identical with Fig. 3 and hence, the steps already referred to will not be described for the sake of simplifying the disclosure.

As shown in Fig. 7, the step 90 is provided between each of steps 36-40 and step 38. As mentioned above, an associated paging area is an external paging area which is managed by a network operator with which the home operator has an agreement to exclusively transfer calls. The data indicating whether or not the paging area, within which the pager is now located, is an associated area, is included in the network data 22 of Fig. 2.

It is understood that if the pager 60 is located within the associated area (such as PA2 of Fig. 1), the pager 60 is locked to the channel via which the network data 22 (fig. 2) is transmitted to the pager. On the other hand, if the pager 60 is not located in an associated area, the pager 60 scans all the channels as in the conventional technique.

It will be understood that the above disclosure is representative of only one possible embodiment of the present invention and that the concept on which the invention is based is not specifically limited thereto.

## Claims

1. A method of reducing battery consumption of a pager in a frequency divided pager network system, comprising the steps of:
(a) establishing synchronization of the pager after the pager is initially energized;
(b) checking to determine if the pager is located in an external paging area;
(c) checking to determine if the pager is located in an associated paging area if the pager is detected to be located in the external paging area at step (b); and
(d) locking the pager to one of a plurality of paging channels if the pager is detected to be located in the associated paging area.
